# EUROPEAN PATENT APPLICATION

(11) **EP 4 843 385 A1**
(43) Date of publication of application: **25.11.2026**
(21) Application number: 26168738.8
(22) Date of filing: 27.03.2026
(51) Int. Cl.: A01K 87/00

(54) **LINE GUIDING APPARATUS**

(30) Priority: 09.04.2025 GB 202505323
(71) Applicant: Korda Developments Limited, Basildon, Essex SS14 0HW (GB)
(72) Inventor: Rooney, Adam, Basildon, SS14 0HW (GB); Grundy, Richard Allen, Basildon, SS14 0HW (GB)
(74) Representative: Perlmutter, Jonathan

(57) **Abstract**

Line guiding apparatus (10) for a fishing pole (20). The apparatus (10) comprises an inner component (30) bearing a support (40) with an axle (50) for positioning within the interior, and beneath a hole (25) drilled into the wall of the fishing pole (20). The apparatus (10) further comprises an outer component (60) for positioning on an exterior, and above the hole (25) of the fishing pole (20). The inner (30) and outer (60) components are engageable to retain the line guiding apparatus (10) about the hole (25) of the fishing pole (20). The inner (30) and outer (60) components comprise an aperture (70) extending through the apparatus (10) and through which a cord (240) may extend through the interior of the fishing pole (20) via the axle (50).

## Description

This invention is line guiding apparatus, and in particular line guiding apparatus for a hollow fishing pole.

Fishing poles are predominantly constructed from carbon fibre due to its strength, flexibility and durability. These fishing poles are typically hollow and consist of a number of smaller pole sections that fit together to form a longer pole. Once a fish has been caught, an angler can disassemble the pole to bring the fish within range of a landing net or the like.

As a part of pole fishing, an angler will normally wish to pass elastic cord through the hollow interior of the fishing pole, which will allow the angler to control the tension of the fishing line. Fishing poles are not typically constructed with integral elastic cord, and so this elastic cord will be something that is retrofitted by the angler themselves. Firstly, the angler will drill a hole through the wall of one of the pole sections in order to pass elastic cord through the hole and into the interior of the pole. The drilled hole will usually then be lined with a bush, otherwise the elastic will snag or wear against the side of the hole, and this will cause the elastic cord to become damaged or break. Drilling a hole, installing a bush and then inserting the elastic is often a very fiddly exercise, and furthermore does not solve all of the problems of the elastic becoming damaged or breaking.

An attempt to address the issue of the elastic cord becoming damaged can be found in, for example, GB2518285B which describes a line guiding device for a fishing pole which comprises a bush comprising a roller, where the roller is designed to reduce the friction on the elastic thread, and therefore reduce wear and tear. However, this prior art device is also problematic. Because the user will have to drill their own hole in the pole to install the device, the holes drilled may be of variable size and shape, and so the prior art bush will not usually sit correctly and securely in the hole. This leads to the prior art device often wobbling or falling out of the hole altogether. Anglers are often required to glue the bush within the hole to prevent movement.

The present invention aims to provide a simple solution to this problem.

Therefore, according to the present invention there is provided a line guiding apparatus for a fishing pole comprising a tube having a wall defining an interior, the tube comprising a hole extending through the wall, the apparatus comprising: an inner component bearing a support with an axle for positioning within the interior and beneath the hole of the fishing pole; an outer component for positioning on an exterior of the fishing pole and above the hole of the fishing pole; wherein the inner and outer components are engageable to retain the line guiding apparatus about the hole of the fishing pole and wherein the inner and outer components comprise an aperture extending through the apparatus and through which a cord may extend into the interior of the fishing pole via the axle.

The inner and outer components of the line guiding apparatus engage to prevent the apparatus from being pulled out of the hole such that no adhesive is necessary to secure the apparatus to the fishing pole. The outer component engages with the inner component through the hole of the fishing pole, which defines an aperture that the elastic of the fishing pole can go through.

The engagement of the inner and outer components may result in the wall of the fishing pole becoming wedged between the inner and outer components, preventing movement of the apparatus within the hole and removing the need for any glue or other adhesive.

At least one of the inner and outer components may comprise an engagement portion that extends through the hole when in use. This engagement portion can comprise an engagement element extending from the inner or outer component and which, in use, extends into the other of the inner or outer components. Such engagement element extends through the hole in the pole to engage with the other of the components. If both components comprise an engagement portion, then the engagement element of one component may engage with the engagement element of the other component. The at least one engagement element may extend from the aperture of the inner or outer component and may be received, in use, by the aperture of the other of the inner or outer component.

The engagement element may comprise a plurality of legs. These legs may extend through the hole of the fishing pole to engage the other of the inner or outer components, wedging the fishing pole between the components.

Furthermore, either of the inner and outer components can be annular and create a round aperture when both are engaged with each other.

Additionally, the axle in the apparatus may comprise a roller pivotally attached to the support. This roller can then be used to assist the passage of the cord through the interior of the fishing pole towards the desired end and also to reduce friction on the elastic during use.

The outer component of the apparatus may also comprise an abutment surface to abut the outer surface of the fishing pole. The abutment surface secures the position of the outer component about the hole in the fishing pole, preventing it from wobbling or falling out of or into the hole.

The abutment surface may comprise a flange surrounding an upper surface of the aperture. The flange may be disposed on an upper surface of the outer component and allow for engagement of the outer component with the hole of the fishing pole.

The inner and outer components may further comprise a bush insertable into at least the aperture of the outer component, the bush further comprise an aperture for insertion of the cord therethrough. The bush may further reduce friction against the cord in use. Furthermore, the bush may help to secure the engagement of the inner and outer components about the hole in the fishing pole by forcing apart the aperture on the outer component against the inner component when engaged. Furthermore, the separate bush enables the bush to be made of a different material to the inner and outer components and be one that most reduces friction. Therefore, the bush may be moulded from PTFE, which provides minimal friction so as to prevent wear and tear on the elastic cord as it is pulled through the interior of the fishing pole.

The line guiding apparatus may comprise a plurality of interchangeable bushes, each bush having a different diameter of aperture. The elastic cord used by anglers may be interchangeable and of different diameters, for example where the user wishes to use cords of different tensions. The provision of interchangeable bushes of different diameters permits the user to change the elastic cord and bush without having to disengage the outer and inner components.

Further, the bush may be cylindrical in shape in order to fit within the aperture. The bush may also include engagement means to engage with the outer component when in use. The engagement means may be a side wall of the bush.

The line guiding apparatus may also comprise a loading tool, which can be used to position the inner component within the interior of the fishing pole. Said loading tool allows for a user to position the inner component within the fishing pole before connecting the outer component, thus reducing the difficulty for an angler to install the present line guiding apparatus.

The loading tool can comprise, at a first end, engagement means for releasable connection to the inner component, such that the loading tool can be engaged with the inner component outside the fishing pole and whilst inserted into the fishing pole, it can release the inner component once it has been positioned appropriately.

The loading tool may also comprise, at a second end, guidance means for directing the elastic cord, when inserted, correctly through the interior of the fishing pole.

This guidance means can be a sloped surface of the loading tool that guides the cord towards the correct end of the fishing pole.

The loading tool may further comprise a flexible stem which upstands from the first end thereof. The stem may be located on the first end beneath the inner component, when the inner component is engaged with the tool, so that the stem extends through the aperture on the inner component. The stem is a positioning guide whereby when the tool is inserted into the fishing pole, the flexible stem extends through the hole in the fishing pole when correctly located. The outer component can then be applied about the flexible stem, to guide it to the inner component for engagement.

According to a further aspect of the present invention there is provided a method of installing a cord in a fishing pole comprising a tube having a wall defining an interior, the tube comprising a hole extending through the wall, the method using line guiding apparatus as previously described, the method comprising: positioning an inner and outer component about the hole; engaging the inner and outer components about the hole; and installing the cord in to the fishing pole via the aperture.

The present invention will now be described in detail, but by way of example only, with reference to the following Figures, in which:
Figure 1 shows an exploded perspective view of line guiding apparatus according to the present application;
Figure 2 shows an exploded perspective view of an inner component as shown in Figure 1;
Figure 3 shows an elevated perspective view of an assembled inner component of Figure 1 and Figure 2;
Figure 4a and 4b show alternative perspective views of an outer component of Figure 1;
Figure 5 shows a perspective view of a bush of Figure 1;
Figure 6 shows a side view of a loading tool of Figure 1;
Figure 7 shows a perspective view of a loading element of the loading tool of Figure 1;
Figure 8 shows a perspective view of a line guiding element of the tool of Figure 1;
Figure 9 shows a hole positioning element of the line guiding element of Figure 1;
Figure 10 shows a side view of the interior of a fishing pole and the present line guiding apparatus in use;
Figure 11 shows a flowchart detailing each step of the method of the present invention; and
Figures 12-16, show examples of the steps of detailed within the flowchart of Figure 11.

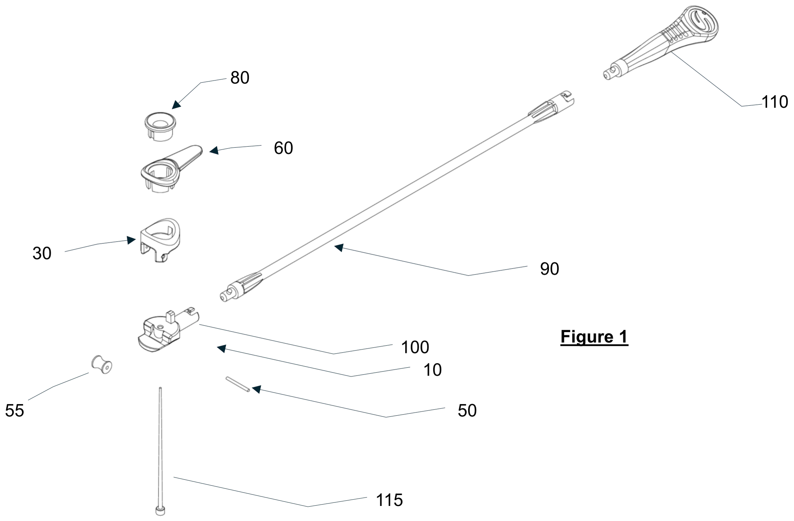

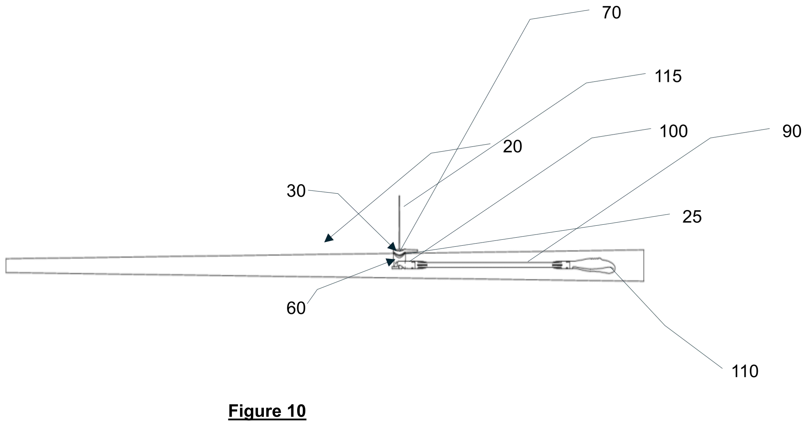

Referring to Figure 1, there is shown line guiding apparatus, generally indicated 10, for use with a fishing pole generally indicated 20, and as shown for example in Figure 10. Fishing pole 20 comprises a tube having a wall defining an interior, the tube comprising a hole, generally indicated 25 extending through the wall. The hole will generally be drilled into the pole by a user, and will not normally come as part of the pole as sold.

The line guiding apparatus comprises an inner component, generally indicated 30, bearing a support generally indicated 40 with an axle generally indicated 50 for positioning within the interior and beneath the hole 25 of the fishing pole 20, and an outer component generally indicated 60 for positioning on an exterior of the fishing pole 20 and above the hole 25 of the fishing pole 20. The inner and outer components are engageable to retain the line guiding apparatus 10 about the hole of the fishing pole 20. The inner and outer components collectively define an aperture 70 extending through the apparatus and through which a cord may extend through the interior of the fishing pole via the axle 50. In this embodiment the line guiding apparatus further comprises a bush, generally indicated 80, and a loading tool comprising a body 90, a saddle 100, a handle 110, and an elastic stem 115.

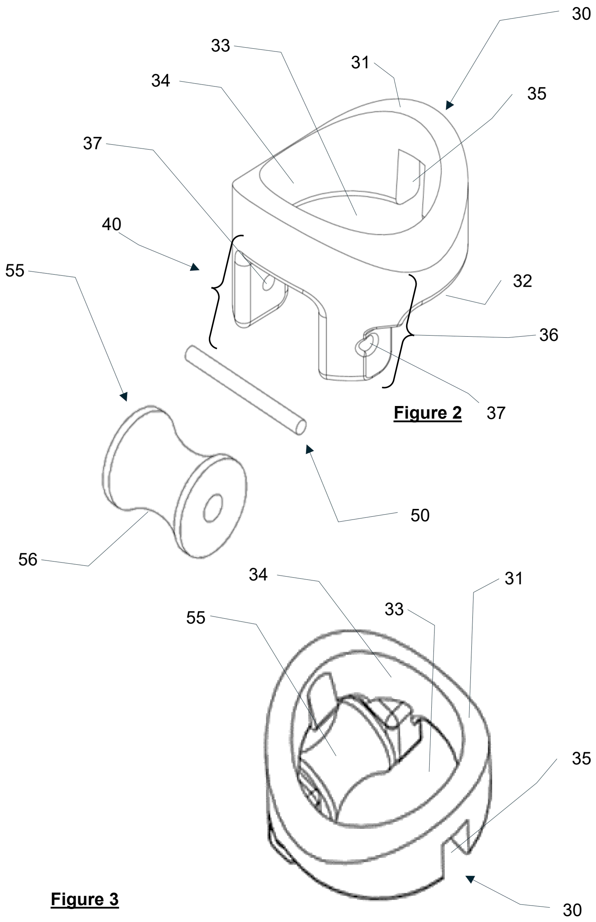

Referring to Figures 2 and 3, there are shown perspective views of the inner component 30 which comprises a body section comprising a side wall 34, an upper surface 31, and a lower surface 32. As shown, the upper surface 31 is generally annular and curved. An aperture 33 extends through the body section and within the inner component 30. Further the upper surface 31 is sized to be larger than the hole in the fishing pole 20, so that in use the upper surface 31 abuts the fishing pole 20.

The lower surface 32 of the inner component is substantially planar and further comprises connecting means 36, comprising opposed legs, and an engagement element 35, which enable it to engage with other elements of the line guiding apparatus 10 including the saddle 100 of the loading tool, with which it can be engaged in order that the inner component 30 can be positioned within the interior and beneath the hole 25 of the fishing pole 20.

The lower surface of the inner component 30 further comprises a support 37 comprising a slot in each opposed leg bearing an axle 50 and roller 55 therebetween. The roller, generally indicated 55, is rotatably mounted on the axle 50 disposed between the support 37 within the inner component 30. In this example, the body 56 of the roller 55 is biconcave or hourglass shaped to retain an elastic cord in use.

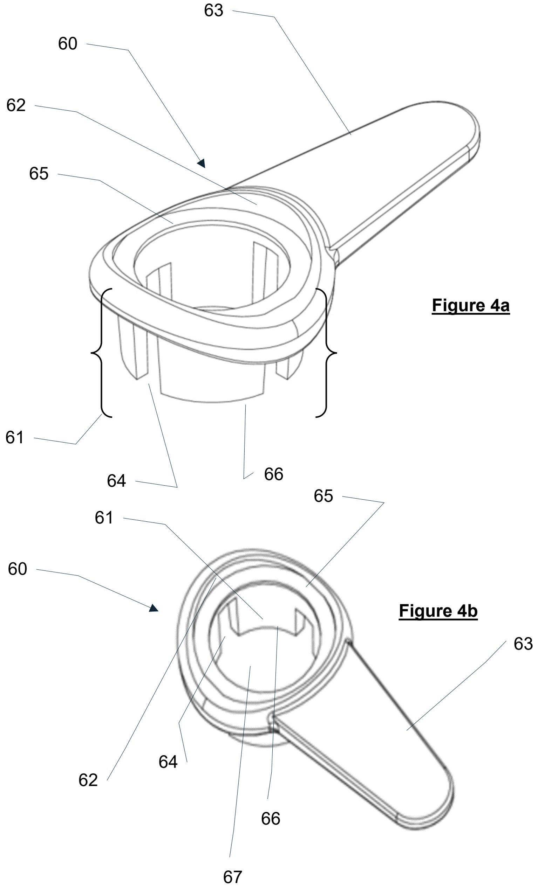

Figures 4a and 4b, there are shown perspective views of the outer component 60 which comprises a body section composed of three downwardly-extending legs 61, an annular flange 62 and a handle section 63. The flange 62 and the legs 61 together define an aperture 67 for passage of an elastic cord therebetween. Extending from a side edge of the flange is the handle section 63. The legs are separated by a gap 64 to form a discontinuous friction joint. As will be explained in more detail below, the friction joint is sized to be inserted into the aperture of the outer component 60 to form a friction fit that retains the outer component 60 within the inner component 30. The outer component 60 further comprises a curved upper surface 65, and a curved lower surface 66. The flange 62 in use abuts the fishing pole adjacent the hole therethrough to prevent the outer component 60 from falling through the hole.

The handle section 63 provides an additional abutment surface for engagement of the outer component 60 about the hole of the fishing pole 20, allows the outer component 60 to be held when it is being located into the inner component 30, and provides a surface for pushing the outer component 60 into the inner component 30.

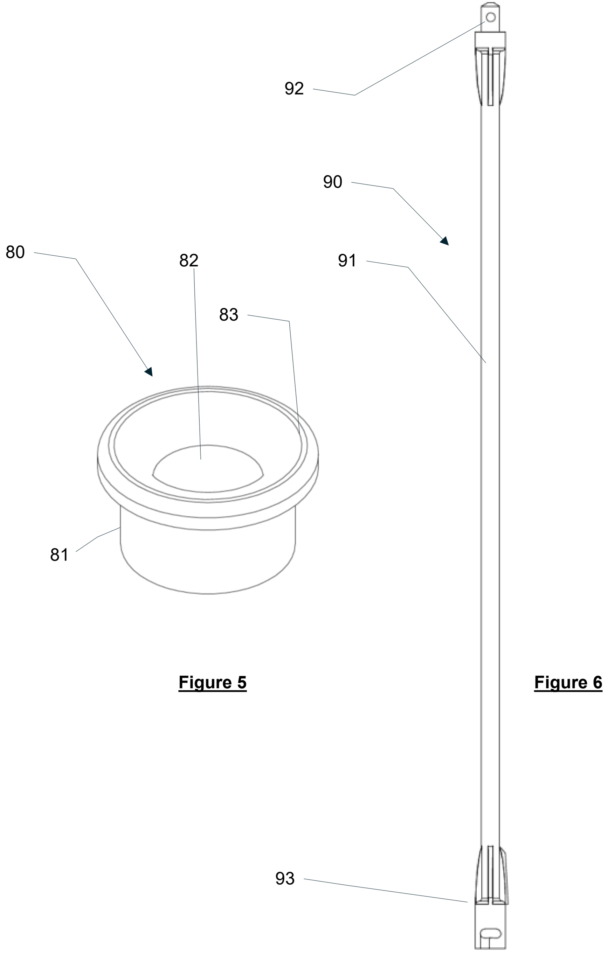

Turning to Figure 5, there is shown a bush, generally indicated 80, which is part of the line guiding apparatus 10. The bush 80 comprises an annular body section comprising a circular wall 81, which defines an aperture 82, and a flange 83 at an upper surface thereof. The bush is insertable into the aperture of the outer component 60, and will preferably be made of PFTE or similar to provide a low-friction surface for the elastic cord to be inserted therethrough. A plurality of bushes may be provided each having a different diameter of aperture 82, but an identical diameter of outer surface of circular wall 81, which will be optimised for different thicknesses of elastic cord in use. The bush 80 is insertable with a friction fit into the aperture of the outer component 60, but can be replaceable with an alternative bush where desired.

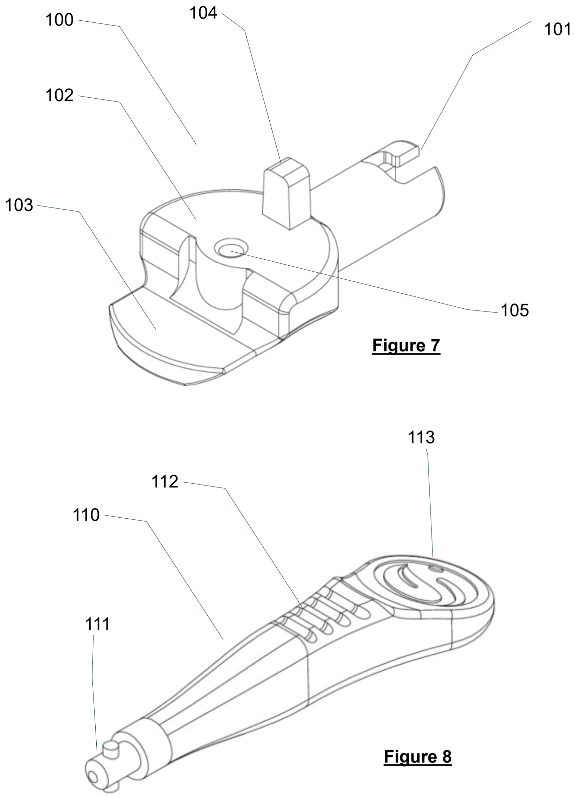

Turning to Figures 6-9, there are shown the different component parts of the loading tool, as shown in Figure 1, which can form part of the line guiding apparatus 10. The loading tool comprises a body, generally indicated 90, a saddle generally indicated 100 and a handle section generally indicated 110. Turning to Figure 6, there is shown the body 90 of the loading tool comprising an elongate pole 91. The body 90 is cylindrical and comprises connecting means at both ends in order for it to engage the saddle 100 and handle 110 of the loading tool. The body 90 is connectable at a first end 92 to the saddle 100, and comprises one half of a bayonet mount, and in particular connector pins which can connect to corresponding slots on the saddle, as shown best in Figure 7. At the other end 93 of the body 90 are the slots of a further bayonet mount which allows the body 90 to be releasably connectable to the handle 110, which comprises corresponding connector pins, as best shown in Figure 8.

Turning to Figure 7, there is shown the saddle 100 which is for positioning the inner component 30 of the line guiding apparatus 10 inside the pole 20 in use. The saddle 100 comprises connector slots at one end 101, which forms part of the bayonet mount which engages with the connector pins 92 of the body 90 of the loading tool as previously described. The saddle 100 further comprises a first planar surface 102 and a second planar surface 103 which are for receiving and mounting the inner component 30. In this example, sitting on the first planar surface 102, there is an insert 104 for engagement with the inner component 30 such that the inner component 30 can sit on top of and dock on the saddle 100. The inner component 30 engages the saddle via its engagement element 35, which is sized to slot in and connect with the insert 104. The opposed legs of the connecting means 36 then sit on the second planar surface 103. Once engaged with the inner component 30 the socket 101 permits the saddle 100 to be releasably connected with the body 90 via the connector pins 92 so that the inner component 30 can be positioned within the interior of the fishing pole 20 beneath the hole 25.

Turning to Figure 8, there is shown the handle 110, of the loading tool. The handle 110 comprises connector pins of a bayonet mount 111 at one end to permit releasable attachment to the socket 93 of the body 90 of the loading tool. The handle 110 further comprises a serrated surface 112, to assist a user in gripping the handle 110 and using the loading tool. The handle 110 further comprises a sloped end 113, which, as will be described in more detail later, can be inserted into the interior of the fishing pole 20 in order to act as a guide for elastic cord so that said elastic cord inserted into the interior of the fishing pole 20 is directed the correct way inside the fishing pole 20.

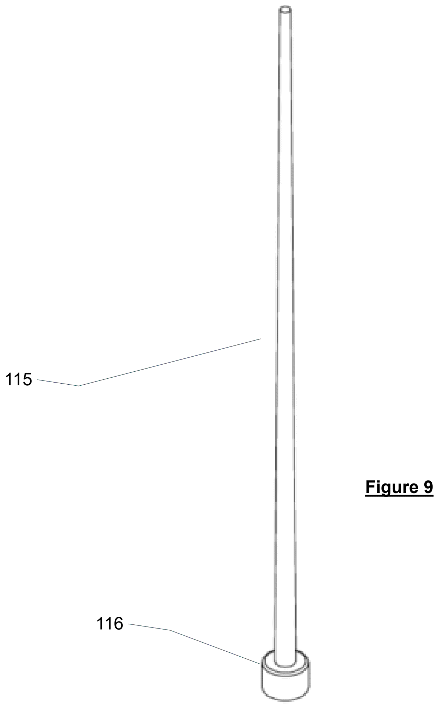

As best shown in Figures 9 and 10, the loading tool further comprises a flexible stem 115 for locating the loading tool in the fishing pole. This comprises a base 116 which is positioned beneath and engageable with a recess (not shown) in the underside of the saddle 100. The stem 115 then extends through aperture 105 in the saddle 100, and the inner component 30 can then be secured to the saddle 100, with the stem 115 extending through aperture 33 of the inner component 30. The stem 115 is flexible to allow it to pass through the interior of the fishing pole 20, and once the end of the stem has passed beneath the hole 25 in the pole 20, the user can pull on the stem 115, to position the inner component 30 correctly within the fishing pole 20.

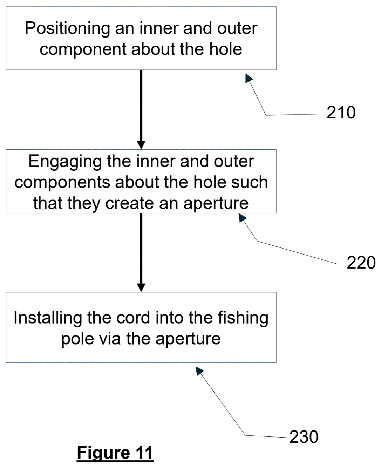

Turning to Figure 11, there is shown a flow chart displaying the method of installing a cord within the interior of a fishing pole 20 using the line guiding apparatus 10.

At Step 210 there is shown the step of positioning an inner and outer component about the hole

At Step 220, there is shown the step of engaging the inner and outer components about the hole such that they create an aperture.

At Step 230, there is shown the step of engaging the inner and outer components about the hole such that they create an aperture.

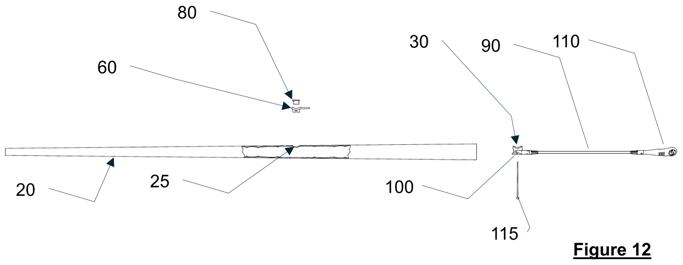

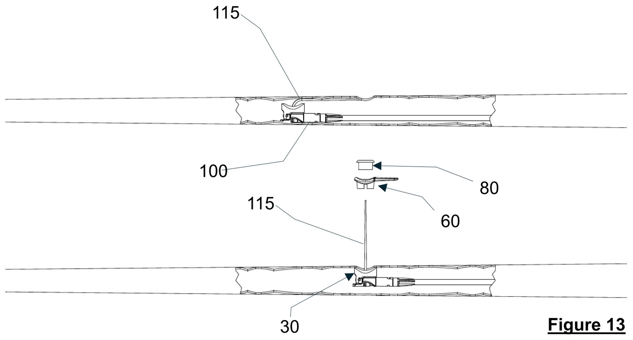

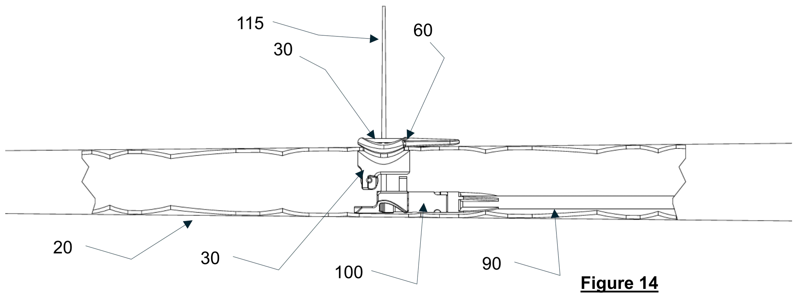

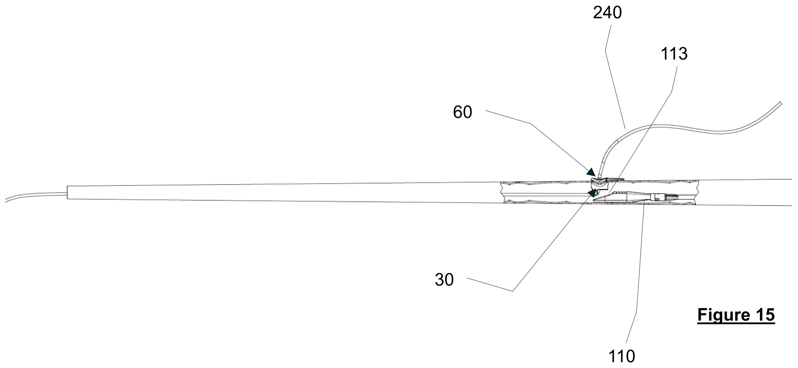

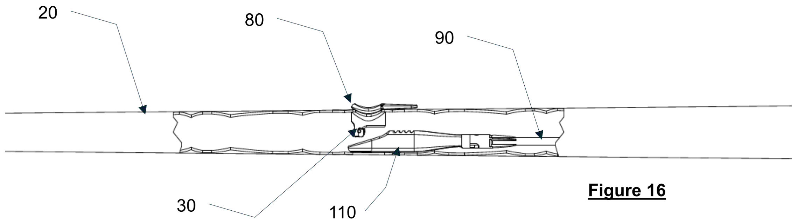

To expand upon the method, reference is made to Figures 12-16

Initially, the inner component 30 is disposed on the saddle 100 of the loading tool, and the flexible stem 115 extends through the aperture of the inner component 30. The loading tool is then passed into the interior of a fishing pole 20, causing the flexible stem 115 to bend. Once the flexible stem 115 has passed the hole 25 in the fishing pole 20, the end of the flexible stem 115 emerges from the hole 25. A user can then pull on the flexible stem 115 to position the inner component 30 beneath the hole 25. The user can then install the outer component 60, using the handle 63, by placing the outer component 60 about the hole 25 so that the legs 61 are inserted into the aperture of the inner component 30. The user can then press on the outer component to produce a friction fit, with the inner 30 and outer 60 components pressing against the saddle 100 of the loading tool. Once the inner 30 and outer 60 components are engaged, the loading tool can be removed with the saddle 100 disengaging from the inner component 30.

The bush 80 can then be pressed into the aperture 67 of the outer component 60 to further secure the outer component 60 to the inner component 30.

In order to install elastic cord 240 into the pole, the user first turns the loading tool round and inserts the handle section 110 into the pole so that the sloped end 113 is raised upwards, and then positions the handle section 110 beneath the inner component 30. When cord 240 is fed into the aperture 67 of the outer component 60 and past the roller 56, the cord 240 will contact the sloped end 113 and be directed to correct way into the pole.

## Claims

1. Line guiding apparatus (10) for a fishing pole (20) comprising a tube having a wall defining an interior, the tube comprising a hole (25) extending through the wall, the apparatus (10) comprising:
an inner component (30) bearing a support (40) with an axle (50) for positioning within the interior and beneath the hole (25) of the fishing pole (20);
an outer component (60) for positioning on an exterior of the fishing pole (20) and above the hole (25) of the fishing pole (20);
wherein the inner and outer components are engageable to retain the Line guiding apparatus (10) about the hole (25) of the fishing pole (20) and wherein the inner (30) and outer (60) components comprise an aperture (70) extending through the apparatus (10) and through which a cord (240) may extend through the interior of the fishing pole (20) via the axle (50).

2. Line guiding apparatus (10) according to claim 1, wherein at least one of the inner (30) and outer (60) components comprise an engagement portion (30) that extends through the hole (25) when in use.

3. Line guiding apparatus (10) according to claim 2, wherein the engagement portion (30) comprises at least one engagement element (3) extending from the inner (30) or outer (60) component and which, in use, extends into other of the inner (30) or outer (60) components.

4. Line guiding apparatus (10) according to claim 3, wherein the at least one engagement element (3) extends from the aperture (70) of the inner (30) or outer (60) component and which is received, in use, by the aperture (70) of the other of the inner (30) or outer (60) component.

5. Line guiding apparatus (10) according to any of claims 2 to 4, wherein the engagement element (3) comprises a plurality of legs.

6. Line guiding apparatus (10) according to any of the preceding claims, wherein the inner (30) and outer (60) components are annular.

7. Line guiding apparatus (10) according to any of the preceding claims, wherein the axle (50) comprises a roller (55) pivotally attached to the support (40).

8. Line guiding apparatus (10) according to any of the preceding claims, wherein the outer component (60) comprises of an abutment surface to abut the outer surface of the fishing pole (20), and wherein the abutment surface comprises a flange (62) surrounding an upper surface (65) of the aperture (70).

9. Line guiding apparatus (10) according to any of the preceding claims, wherein the Line guiding apparatus (10) further comprises a bush (80) insertable into at least the aperture (70) of the outer component (60), the bush (80) further comprising an aperture (82) for insertion of the cord (240) therethrough.

10. Line guiding apparatus (10) according to claim 9, wherein the Line guiding apparatus (10) comprises a plurality of interchangeable bushes (80), each bush (80) having a different diameter of aperture (82).

11. Line guiding apparatus (10) according to claim 9 or 10, wherein the or each bush (80) is cylindrical, and comprises of engagement means that engage with the outer component (60) when in use, wherein the engagement means of the or each bush (80) is optionally a side wall (81) of the or each bush (80).

12. Line guiding apparatus (10) according to any of the preceding claims, further comprising a loading tool, comprising a body section (90) for insertion in to the interior of the fishing pole (20), wherein the tool (90) comprises, at a first end (92), engagement means (100) for releasable connection to the inner component (30).

13. Line guiding apparatus (10) according to any of claim 12, wherein the tool (90) comprises at a second end (93) guidance means (110) for directing the cord (240), when inserted, correctly through the interior of the fishing pole (20), the guidance means optionally (110) comprises a sloped surface (113) of the tool (90) to guide the cord (240).

14. Line guiding apparatus (10) according to claim 12 or 13, wherein the tool (90) further comprises a flexible stem (115) upstanding from the first end (93).

15. A method of installing a cord (240) in a fishing pole (20) comprising a tube having a wall defining an interior, the tube comprising a hole (25) extending through a wall thereof, the method using Line guiding apparatus (10) according to any of the preceding claims, comprising a tube defining an interior, the tube comprising a hole (25) extending through a wall thereof, the method comprising:
- positioning an inner (30) and outer (60)component about the hole (25);
- engaging the inner (30) and outer (60) components about the hole (25) such that they create an aperture (70);
- installing the cord (240) in to the fishing pole (20) via the aperture (70).
